# EUROPEAN PATENT APPLICATION

(11) **EP 4 574 229 A1**
(43) Date of publication of application: **25.06.2025**
(21) Application number: 24220557.3
(22) Date of filing: 17.12.2024
(51) Int. Cl.: B01D 29/48, E21B 43/08

(54) **WELL FILTER**

(30) Priority: 18.12.2023 IT 202300026967
(71) Applicant: GTS Well Components S.r.l., 46027 San Benedetto PO (MN) (IT)
(72) Inventor: GANDOLFI, Alessio, 46027 San Benedetto PO (MN) (IT)
(74) Representative: Provvisionato, Paolo

(57) **Abstract**

A filter (10) suitable for use in a well comprises a filter body (16) having a plurality of longitudinal supporting bars (12) arranged along generators of a cylinder and at least one profile (14) arranged helically around said bars and fastened thereto with a constant first pitch (P_{c}) in at least one end portion (20, 22) of the filter body, a connector (24, 26) having a thread (28) with a pitch equal to said first pitch (P_{c}) of the profile in at least one end portion of the filter body, the connector being able to be screwed onto said end portion of the filter body, and a collar (50) interposed between the end portion (20, 22) of the filter body and the connector (24, 26), the collar preventing the connector from unscrewing from the end portion (20) of the filter body (16).

## Description

### Field of the invention

The present invention relates to a filter suitable for use in the construction of wells.

The invention was developed with particular regard to a well filter with an improved connection system.

### Technological background

In the construction of wells for water extraction or drainage work, it is known to use pipes, for example PVC pipes, on which tubular filters are fitted. The purpose of these filters is to stop coarser-grained debris, at most allowing fine particulate matter to enter the well. There are different types of filter, for example with holes, slits, or windows cut into a side wall of a cylindrical component. A specific type of filter that has proven to be particularly effective is generally referred to as a spiral filter or continuous-opening filter. Such a filter is obtained by wrapping a steel profile in a helix around supporting profiles arranged along the generators of a cylinder. The pitch is constant and chosen according to the desired flow rate and water speed.

A critical point of these filters is their connection at the ends. The use of metal connectors with different metals in contact with each other can cause corrosion in the contact area between the different types of metal. There are also connectors, for example described in patent US8430158, which use heat-shrink plastic rings, which are heated during installation.

One problem with the known devices is that they are complex to install and relatively expensive. Both problems are particularly relevant in jobs requiring a large number of filters.

This same applicant invented a connection system consisting of plastic connectors that screw onto the filter portions, taking advantage of the spiral shape thereof. One problem with this solution is that it does not provide an optimal seal over time.

### Summary of the invention

One objective of the invention is to solve the problems of the prior art and in particular to provide a filter that provides an excellent seal, even following the application of stresses over time. Another objective is to provide a filter with a connector that is simple to use, preferably that can be connected to the filter without the use of machinery. It is also intended to provide a filter with a connector that does not require welding, screws or rivets to fasten the connector to the filter. An additional objective is to produce a filter with a connector that is particularly inexpensive and simple to produce.

According to a first aspect, a filter suitable for use in a well is described. The filter may comprise a filter body having a plurality of longitudinal supporting bars arranged along generators of a cylinder and at least one profile arranged helically around said bars and fastened thereto with a constant first pitch in at least one end portion of the filter body. The filter may comprise a connector having a thread with a pitch equal to said first pitch of the profile in at least one end portion of the filter body. The connector may be screwed onto said end portion of the filter body. The filter may comprise a collar interposed between the end portion of the filter body and the connector. The collar can interfere mechanically with the connector and the filter body. The collar may be shaped to prevent the connector from unscrewing from the end portion of the filter body.

The described filter is extremely simple to connect to other filters and/or a pipe, such as a pipe for constructing a well. The connection also does not require the use of screws, rivets, or any other additional components, or even metal components, which are inherently prone to oxidizing. Furthermore, the collar prevents the connector and filter body from separating from each other, even under continuous stresses that are prolonged over time. The resulting filter is therefore particularly durable and reliable.

The connector may also comprise an intermediate portion that has a profile, which may be toothed or otherwise shaped. The collar may comprise an annular portion. First projections, shaped to interfere with the profile in the connector, may project from the annular portion. Second projections, shaped to interfere with the filter body, preferably with the longitudinal bars of the filter body, may project from the annular portion.

The first projections may be triangular, preferably right-angled-triangle-shaped, preferably oriented consistently with the toothed profile.

The second projections may be shaped to be inserted between adjacent longitudinal bars. They preferably have a width equal to the distance between said two adjacent bars. They are preferably shaped as rectangles.

The toothed profile of the intermediate portion of the connector may have peaks facing the collar, when in use, and troughs facing the opposite way. The toothed profile may comprise triangular teeth, preferably right-angled-triangle-shaped teeth.

The collar is preferably made of a plastic polymer, preferably polyamide or polypropylene, for better coupling with the connector.

The connector is preferably made of uPVC, which ensures adequate durability and better mechanical performance.

### Brief description of the drawings

Further features and benefits will be evident from the following detailed description of a preferred embodiment of the invention, with reference to the attached drawings, provided as a non-limiting example only, in which:

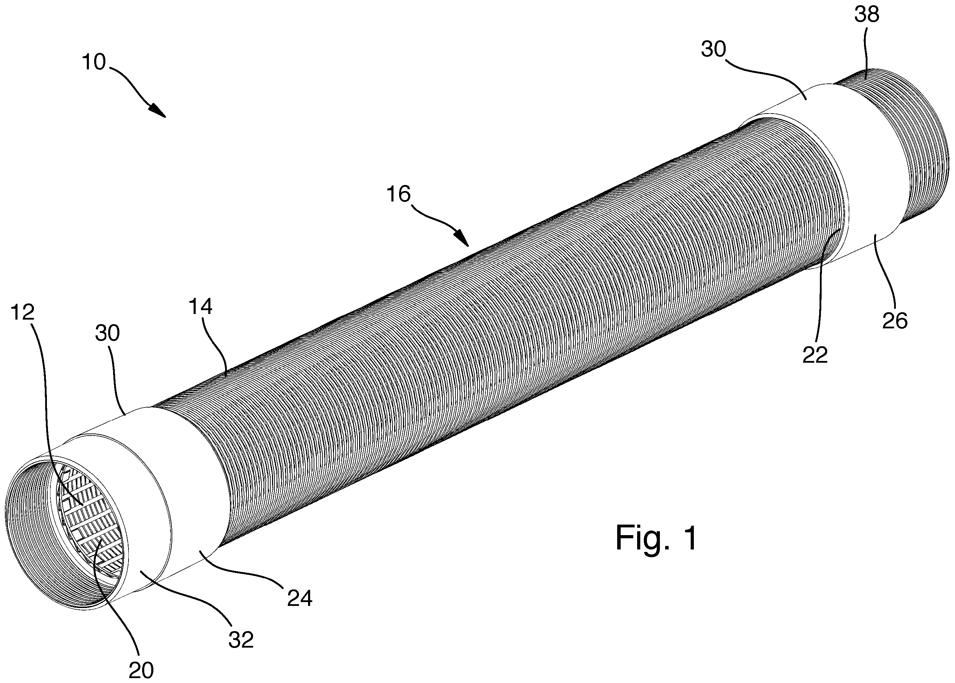

- Figure 1 is an overview of a filter according to the invention, with a pair of connectors fitted,
- Figure 2 is an exploded view of a first end of the filter in Figure 1, and
- Figure 3 is a side view of the end in Figure 2, partially assembled, and
- Figure 4 is a side view of the end of figure 2, assembled.

### Detailed description

With reference to the drawings, a well filter 10 comprises a plurality of longitudinal bars 12 arranged along generators of a cylinder. The filter also comprises a profile 14 arranged helically around said bars to form a filter body 16. The profile 14, hereinafter referred to as the helical profile, is arranged with a predetermined pitch P_{F} so as to form a continuous slit 17 delimited by successive turns of the helical profile 14. The continuous slit 17 is also helical, with the same pitch P_{F}. The width of the slit is determined by the difference between pitch P_{F} and length B of the base of the helical profile 14. Depending on the particle size of the material to be stopped, it may be between 0.1 mm and 4 mm, although filters with a gap wider or narrower than these values are possible. For example, the diameter of the filter body 16 may be between 9 mm and 406 mm.

The helical profile 14 is fastened to the supporting profiles, preferably by welding. In particular, it is preferably fastened by resistance welding (RW), i.e. by pressure welding, achieved by heating the profiles and bars by applying an electric current thereto. The profiles and bars are preferably made of stainless steel, which reduces potential corrosion and scale problems that depend on the chemical composition of the water in which the filter is used.

A filter thus shaped has a much larger open area compared to other filters, for example made using pipes with longitudinal slits, enabling high flow rates while keeping the inlet water speed very low.

The bars 12 preferably have a circular cross-section. The helical profile preferably has a triangular or trapezoidal cross-section, with the base of the triangle or the largest base of the trapezium arranged on the outside to form an outer surface 18 of the filter body. This cross-section and arrangement allows only the finest particulate matter to pass through. When used in wells, this prevents the risk of damaging the pump. At the same time, filter bodies thus configured reduce the formation of scale, since the narrowest point of the slit is on the outer surface 18 of the filter body, and a grain, once it has passed through the narrowest point, can slide inside the filter body 16 without getting stuck in, and thereby obstructing, the slit 17. The dimensions of the bars and of the helical profile can be chosen depending on the crushing pressure and traction that the filters are required to withstand.

The helical profile has a pitch P_{C} at end portions 20, 22 of the filter body.

The filter also comprises a pair of connectors 24, 26, which are designed to be connected respectively to the end portions 20, 22 of the filter body. Each connector is preferably made from plastic. For example, it may be made from unplasticized polyvinyl chloride (uPVC), although different materials may be used. The connectors are preferably made by injection in a special mould.

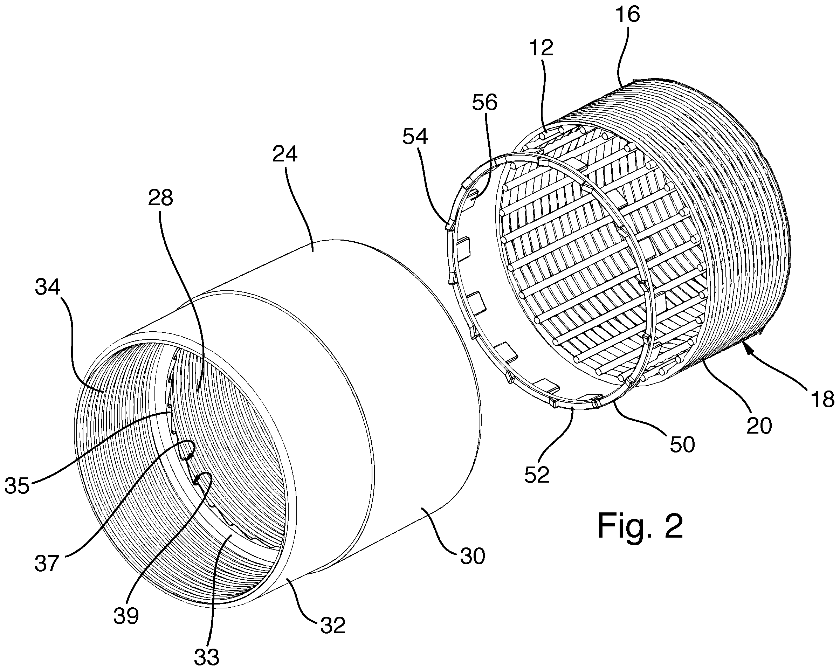

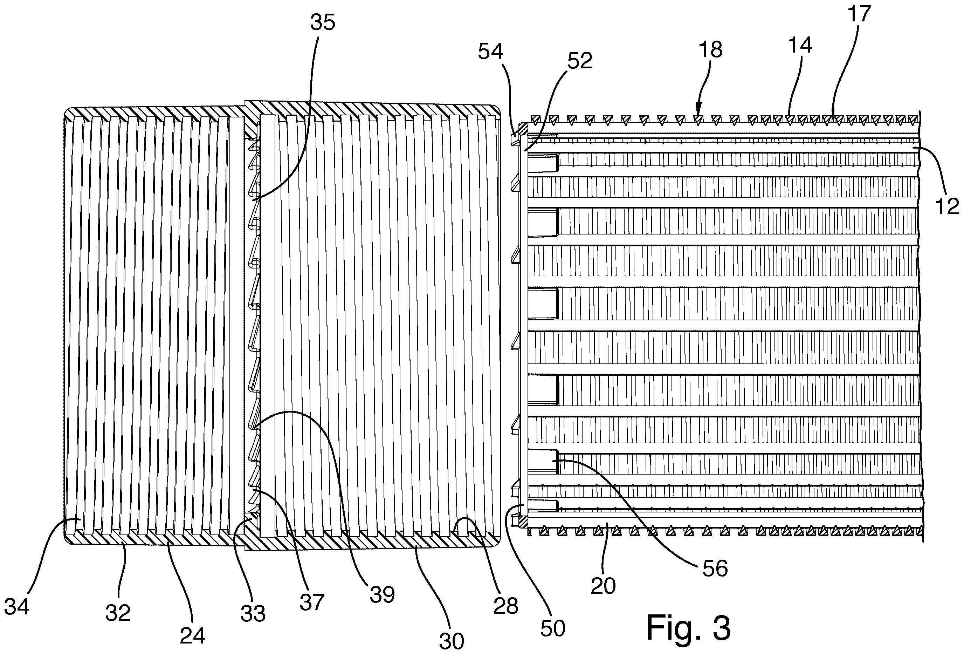

With particular reference to Figures 2 and 3, the first connector 24 comprises a first portion 30 suitable for being fastened to a filter body 16 and a second portion 32 suitable for being fastened to a second connector 26, or more generally to a pipe, for example a pipe for constructing a well.

The first portion 30 comprises an internal thread 28 with a pitch P_{C}, i.e. with the same pitch as the helical profile 14 in the end portions 20, 22 of the filter body. The thread preferably has a trapezoidal cross-section, with a base of length B equal to the length B of the base of the section of the helical profile 14. The connector 24 is therefore suitable for being screwed around an end portion 20, 22 of the filter body. The helical profile 14 slides into the internal thread 28, enabling the two components to be screwed together. In other words, the helical profile 14 forms an external thread complementary to the internal thread 28 of the connector.

The second portion 32 comprises another thread 34, which is also internal. The thread enables connection to a connector 26 or more generally to any pipe with an external thread with the same pitch.

Between the first portion 30 and the second portion 32 there is an intermediate portion 33, which forms a narrowing of lesser diameter inside the connector. The intermediate portion separates the inner threads 34, 28 and acts as a limit stop for the thread 34. The intermediate section 33 also has a toothed profile 35 facing the portion 30 with an internal thread 28, in particular with triangular teeth, and even more specifically with right-angled-triangle-shaped teeth, also commonly referred to as "saw tooth". The toothed profile has peaks 37 facing the portion 30, and troughs 39 facing the portion 32.

The improved filter 10 also comprises a collar 50, which is positioned between the connector 24 and the end portion 20 of the filter body 16. The collar 50, clearly visible in Figures 2, 3 and 4, comprises an annular portion 52, from which project first projections 54, which are directed when in use towards the intermediate portion 33 of the connector, and second projections 56, which are directed when in use towards the end portion 20 of the filter body 16. The first projections 54 are compatible with the toothed profile 35 inside the connector 24. In greater detail, they are triangular, and more specifically right-angled-triangle-shaped, oriented consistently with the toothed profile 35. The second projections 56 are shaped to be inserted between adjacent longitudinal bars 12. In the preferred embodiment shown, they are shaped as rectangles, with a width equal to the distance between two bars 12. As shown more clearly in Figure 3, the second projections 56 are shaped so as to be inserted between adjacent longitudinal bars 12 when the collar 50 is placed next to the end portion 20 of the filter body 16. The second projections 56 thus prevent the relative rotation between the collar 50 and the filter.

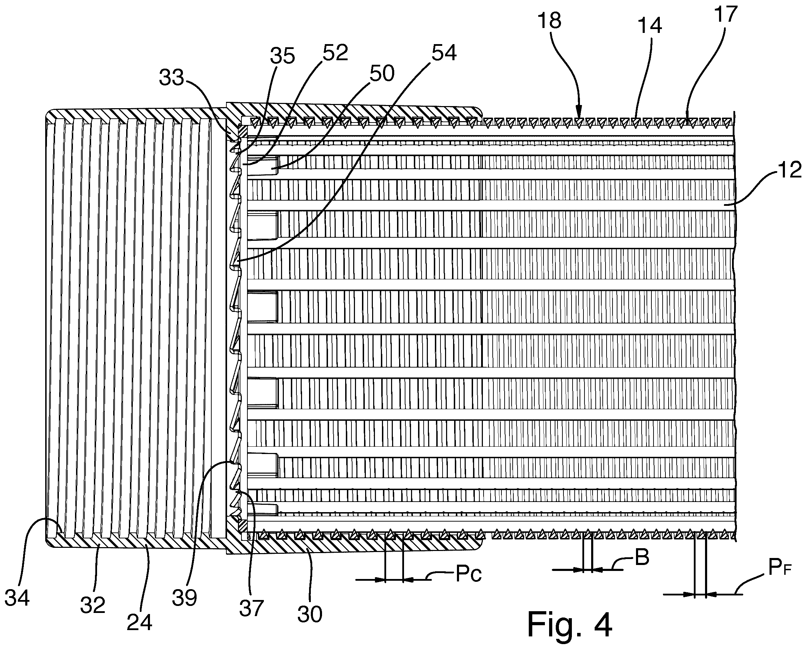

When the filter is assembled, the collar 50 is therefore first positioned on the end portion 20 of the filter body 16, with the second projections 56 inserted between the longitudinal bars 12. In the specific case shown, there are a number of second projections 56 equal to half of the longitudinal bars 12, thereby filling every other space between longitudinal bars. However, more or fewer projections may be provided without departing from the scope of the invention. When the collar 50 is correctly positioned, the connector 24 is screwed onto the end portion 20 of the filter body 16. The two components are tightened until the first projections 54 are inserted into the toothed profile 35, as shown in Figure 4. In this configuration, the first projections 54 interfere with the toothed profile 35, preventing the connector from unscrewing from the end portion 20 of the filter body 16.

The second connector 26 comprises a first portion 30 suitable for being fastened to a filter body 16 and a second portion 38 suitable for being fastened to a connector 24, or more generally to a pipe. A collar 50 is also provided between the second connector 26 and the end portion 22, having the same functionality as the collar between the first connector 24 and the end portion 20.

The first portion 30 is entirely similar to the first portion 30 of the first connector 24 described above, and reference should be made to the description thereof. The second portion 38 comprises another thread 40, which is external. The thread 40 enables connection to a connector 24 or more generally to any pipe with an internal thread with the same pitch. An intermediate portion is provided between the first portion 30 and the second portion 38 to act as a limit stop for the internal threads 28 and 34, which intermediate portion has the same characteristics as the intermediate portion 33 of the first connector 24 described above. It therefore has a toothed profile 35 suitable for interfering with the first projections 54 of the collar to prevent the second connector from unscrewing from the second end portion 22 of the filter body.

It should be noted that the pitch P_{C} of the helical profile 14 at the ends 20, 22 on which the connectors are screwed is generally different from the pitch P_{F} of the helical profile in the rest of the filter body, and is in particular larger, although it cannot be excluded that it may be equal to P_{F} or even smaller. Similarly, it is understood that the helical profile 14 at the two ends 20, 22 could possibly have two different pitches without departing from the scope of protection. It is nonetheless useful to make the pitch at both ends 20, 22 the same, so that the connectors also all have the same pitch and are therefore interchangeable.

Naturally, provided the principle of the invention is retained, the embodiments and details of implementation may vary greatly from what is described and illustrated, without thereby departing from the scope of the invention.

## Claims

1. Filter (10) suitable for use in a well comprising:
- a filter body (16) having a plurality of longitudinal supporting bars (12) arranged along generators of a cylinder and at least one profile (14) arranged helically around said bars and fastened thereto with a first pitch (P_{C}), constant in at least one end portion (20, 22) of the filter body,
- a connector (24, 26) having a thread (28) with a pitch equal to said first pitch (P_{C}) of the profile in at least one end portion of the filter body, the connector being able to be screwed onto said end portion of the filter body,
- a collar (50) interposed between the end portion (20, 22) of the filter body and the connector (24, 26), the collar interfering with the connector and the filter body, preventing the connector from unscrewing from the end portion (20) of the filter body (16).

2. Filter according to Claim 1, wherein the connector also comprises an intermediate portion (33) that has a profile (35) and the collar comprises an annular portion (52), from which project first projections (54) shaped to interfere with the profile (35) in the connector, and second projections (56) shaped to interfere with the filter body.

3. Filter according to Claim 2, wherein the profile (35) is a toothed profile, and the second projections (56) are shaped to interfere with the bars (12) of the filter body.

4. Filter according to Claim 2 or 3, wherein the first projections (54) are triangular, preferably right-angled-triangle-shaped, and oriented consistently with the profile (35) .

5. Filter according to Claim 2, 3 or 4, wherein the second projections (56) are shaped to be inserted between adjacent longitudinal bars (12) and preferably have a width equal to the distance between said adjacent bars.

6. Filter according to Claim 5, wherein the second projections (56) are shaped like as rectangles.

7. Filter according to any one of Claims 2 to 6, wherein the profile (35) of the intermediate portion (33) of the connector has peaks (37) facing the collar and troughs (39) facing the opposite way.

8. Filter according to the previous claim, wherein the toothed profile (35) comprises triangular teeth, preferably right-angled-triangle-shaped teeth.

9. Filter according to any one of the preceding claims, wherein the collar is made of plastic.

10. Filter according to any one of the preceding claims, wherein the connector is made of plastic, preferably uPVC.
